# EUROPEAN PATENT SPECIFICATION

(11) **EP 0 267 968 B1**
(45) Date of publication and mention of the grant of the patent: **22.12.1993**
(21) Application number: 87903427.0
(22) Date of filing: 27.05.1987
(51) Int. Cl.: G06F 15/68

(54) **IMAGE PROCESSOR**
BILDBEHANDLUNGSVORRICHTUNG
PROCESSEUR D'IMAGES

(30) Priority: 27.05.1986 JP 121994/86
(43) Date of publication of application: 25.05.1988
(73) Proprietor: FANUC LTD., Minamitsuru-gun, Yamanashi 401-05 (JP)
(72) Inventor: KURAKAKE, Mitsuo, Hino-shi Tokyo 191 (JP); OTSUKA, Shoichi, Hino-shi Tokyo 191 (JP); MURAOKA, Yutaka, Hachioji-shi Tokyo (JP)
(74) Representative: Billington, Lawrence Emlyn
(86) International application number: PCT/JP87/00336
(87) International publication number: WO 87/07413

(56) References cited:
- EP-A- 0 075 470
- EP-A- 0 138 324
- GB-A- 2 102 603
- JP-A- 5 825 769
- JP-A-58 153 455
- COMPUTER VISION, GRAPHICS, AND IMAGE PROCESSING, vol. 27, 1984, pages 115-123, Academic Press, Inc.; F.A. GERRITSEN et al.: "Implementation of cellular-logic operators using 3*3 convolution and table lookup hardware"

## Description

This invention relates to a picture processing apparatus for performing predetermined operations on items of pixel data for such purposes as extracting the characteristics of a picture.

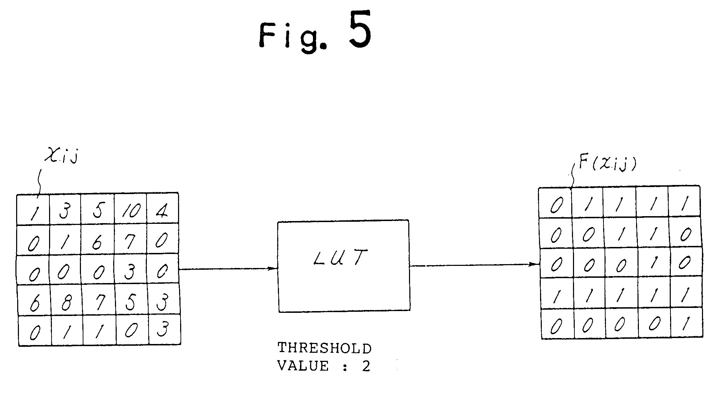

It is known to make use of a look-up table (LUT), after a picture picked up by a camera or the like is digitized, in order to subject the digitized pixel data to such operations as binary coding, density conversion or picture reversal. If a look-up table LUT is used for e.g. binary coding processing, as shown in Fig. 5, 5 x 5 items of pixel data xᵢⱼ which exist prior to processing are binary coded by the look-up table LUT to be converted into 5 x 5 items of binary coded pixel data f(xᵢⱼ). In the example shown in Fig. 5, the arrangement is such that a threshold value is set to "2", with data of a value less than "2" being converted to "0" and data of a value greater than "2" being converted to "1".

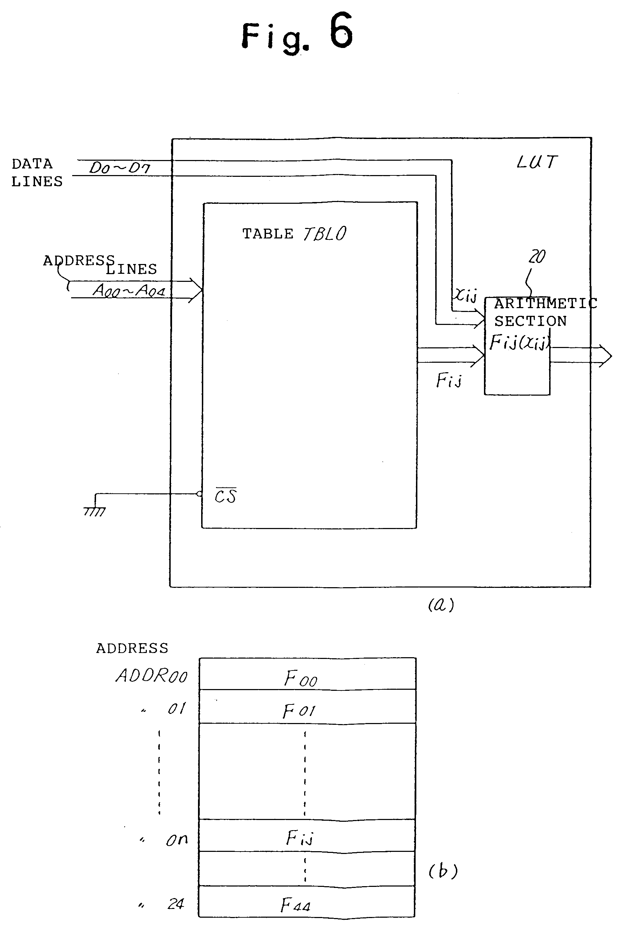

Fig. 6(a) illustrates the construction of a look-up table for processing 5 x 5 items of pixel data. In Fig. 6(a), the look-up table LUT is composed of a table TBL₀ in which operators to be applied to the pixel data are stored upon being correlated with the individual items of pixel data xᵢⱼ, and an arithmetic section 20 for applying operators fᵢⱼ outputted from the table TBL₀ to the corresponding items of pixel data xᵢⱼ. By way of example, five address lines A₀₀ - A₀₄ are connected to the input of the table TBL₀, whereby a maximum of 32 table address spaces can be accessed.

Fig. 6(b) illustrates an example of the configuration of the memory within the look-up table LUT. Each address of the table TBL₀ corresponds to a location of an item of the 5 x 5 pixel data xᵢⱼ, as will be understood from the memory configuration. More specifically, an item of pixel data x₀₀ shown in Fig. 5 corresponds to an address ADDR₀₀, and an item of pixel data x₄₄ corresponds to an address ADDR₂₄. An operator f₀₀ to be applied to the pixel data x₀₀ is stored at the location of address ADDR₀₀ of the table TBL₀, an operator f₀₁ to be applied to the pixel data x₀₁ is stored at the location of address ADDR₀₁, and an operator f₄₄ to be applied to the pixel data x₄₄ is stored at the location of address ADDR₂₄. The table TBL₀ comprises a RAM. Accordingly, the operators fᵢⱼ for application to the individual items of pixel data xᵢⱼ are stored in a form capable of being altered. In Fig. 6(a), a chip select terminal cs of the table TBL₀ or RAM is held at zero potential, so that the table TBL₀ is being selected at all times.

Data lines D₀ - D₇ for the pixel data xᵢⱼ and the output of the table TBL₀ are applied to the arithmetic section 20. The data lines constitute eight bits and are capable of expressing data indicative of 256 levels of tones. The arithmetic section 20 applies the operators fᵢⱼ from the table TBL₀ to the pixel data xᵢⱼ, whereby results fᵢⱼ(xᵢⱼ) are obtained. With respect to the pixel data x₀₁, for example, the address ADDR₀₁ is addressed, the operator f₀₁ is outputted from the table TBL₀, and the operator f₀₁ is applied to the pixel data x₀₁ in the arithmetic section 20.

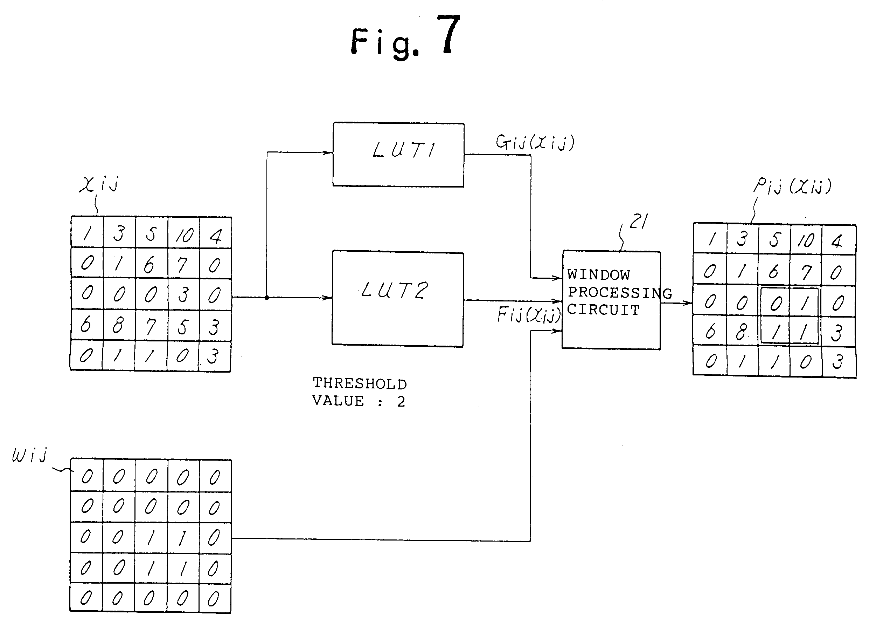

When such pixel data processing is performed, there are cases where it is desired to apply window processing, i.e. mask processing, to specific pixel data. Fig. 7 illustrates a conventional picture processing apparatus which executes window processing at the same time as pixel data processing. Window processing refers to processing in which the processing of pixel data xᵢⱼ is masked and changed over by a window data value. This is performed by providing window data Wᵢⱼ correlated with the number of items of pixel data xᵢⱼ; when an item of window data Wᵢⱼ is "0", certain processing is applied to the item of pixel data xᵢⱼ corresponding thereto (e.g. no processing whatsoever may be applied), and when the item of window data Wᵢⱼ is "1", processing different from that mentioned above is applied to the item of pixel data xᵢⱼ corresponding thereto.

The picture processing apparatus mentioned above is provided with look-up tables LUT₁, LUT₂ that differ from each other, executes separate processing operations with regard to all of the pixel data xᵢⱼ, inputs the results of processing Gᵢⱼ(xᵢⱼ), Fᵢⱼ(xᵢⱼ) to a window processing circuit 21, outputs Gᵢⱼ(xᵢⱼ) as Pᵢⱼ(xᵢⱼ) when the corresponding window data Wᵢⱼ is "0", and outputs Fᵢⱼ(xᵢⱼ) as Pᵢⱼ(xᵢⱼ) when the corresponding window data Wᵢⱼ is "1". In the example of Fig. 7, non-conversion operators Gᵢⱼ are stored in LUT₁, and the outputs Gᵢⱼ (xᵢⱼ) of LUT₁ are taken as xᵢⱼ. More specifically, as for the output Pᵢⱼ(xᵢⱼ) of window processing circuit 21, the pixel data which prevailed prior to processing are outputted as is at addresses where the window data is "0", and pixel data which have been subjected to binary coding processing by LUT2 are outputted at addresses where the window data is "1".

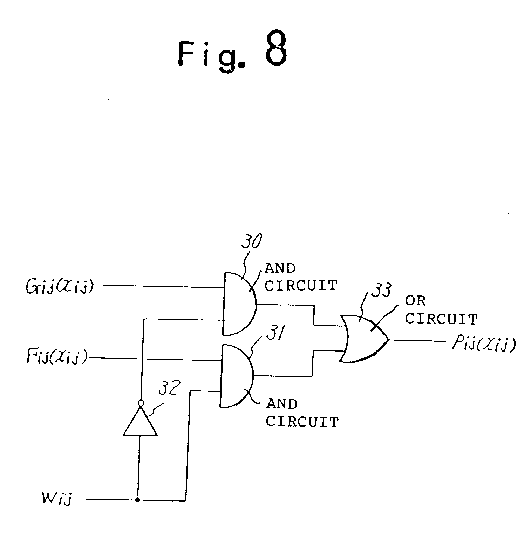

In this conventional apparatus, hard-wired logic shown in Fig. 8 is used as the window processing circuit 21. With this hard-wired logic, the outputs Gᵢⱼ(xᵢⱼ), Fᵢⱼ(xᵢⱼ) of the look-up tables LUT₁, LUT₂ are applied to one input terminal of AND circuits 30, 31, respectively, a signal obtained by inverting the window data Wᵢⱼ by means of an inverter 32 is applied to the other input terminal of the AND circuit 30, and the window data Wᵢⱼ is applied as is to the other input terminal of the AND circuit 31. Accordingly, the outputs Gᵢⱼ(xᵢⱼ) and Fᵢⱼ(xᵢⱼ) are gated by the window data Wᵢⱼ. The outputs of the AND circuits 30, 31 are applied to an OR circuit 33 to obtain the window-processed output Pᵢⱼ(xᵢⱼ).

However, this hard-wired logic is required to be provided for each of the pixels of pixel data to be processed. In the example of Fig. 7, the hard-wired logic is required to be provided for each of 25 pixels. The logic therefore occupies a considerably large surface area of a printed circuit board and entails high cost. Furthermore, considerable time is needed for design, and design modification cannot be easily carried out.

The present invention has been devised to solve the foregoing problems and its object is to provide a picture processing apparatus which reduces hardware costs, enables the processing applied to data to be set very simply and has tables the design whereof can be readily modified.

In accordance with the present invention as claimed, there is provided a picture processing apparatus characterized by comprising a plurality of table memories in which operators are stored, address input lines for inputting address data, which correspond to addresses of pixel data, to each of the table memories, window data lines for selecting the table memories by window data for the pixel data, and processing means for subjecting pixel data to predetermined processing by an operator from a designated address of a selected table memory, whereby pixel data constituting a picture maybe subjected to predetermined processing.

### Brief Description of the Drawings

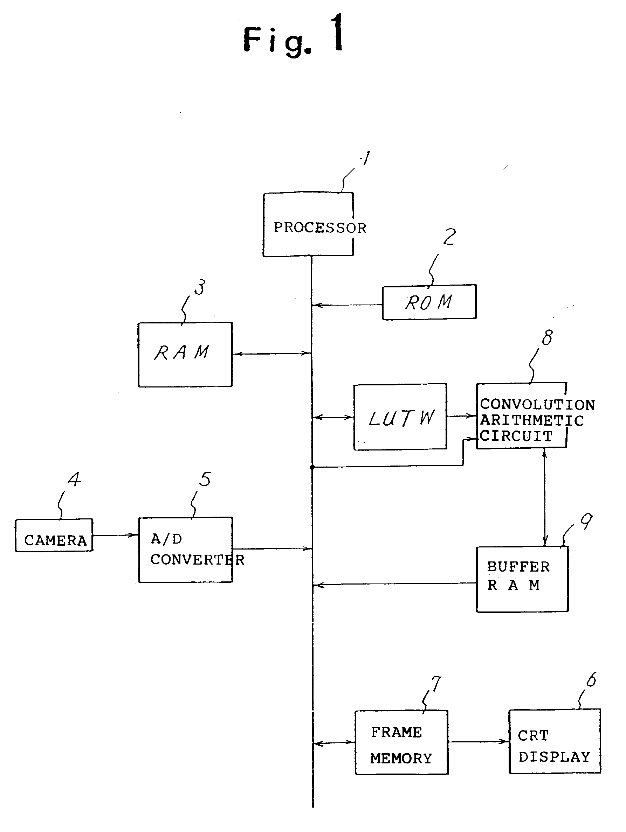

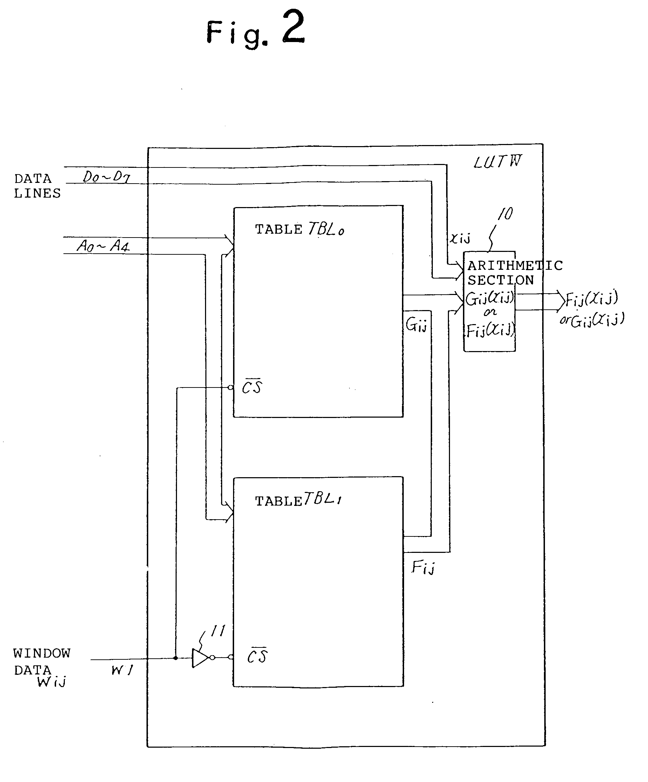

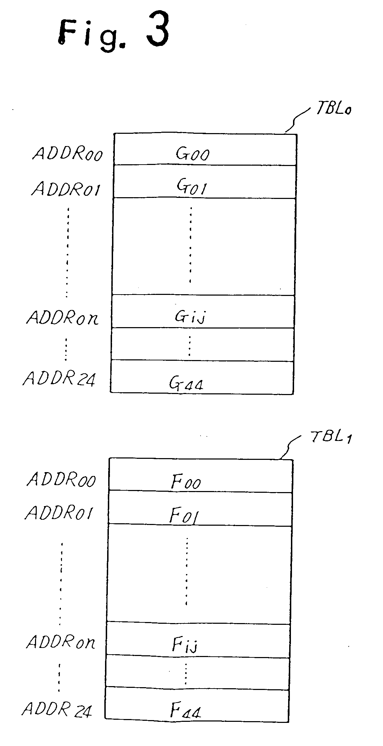

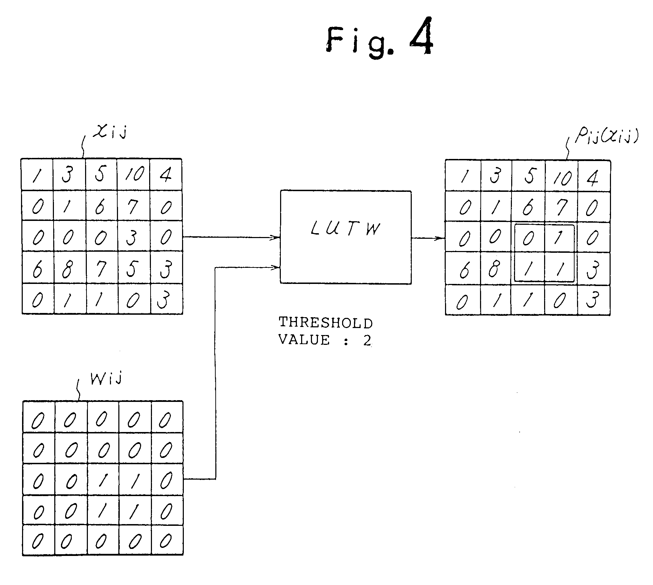

Fig. 1 is a block diagram illustrating an embodiment of a picture processing apparatus according to the present invention, Figs. 2 and 3 are block diagrams illustrating examples of look-up tables in the same embodiment, Fig. 4 is an explanatory view illustrating look-up table processing according to the invention, Fig. 5 is an explanatory view of look-up table processing, Figs. 6(a), (b) are block diagrams of a conventional look-up table, Fig. 7 is an explanatory view illustrating conventional look-up table processing, and Fig. 8 is a view showing the construction of a conventional window processing circuit.

An embodiment of the present invention will now be described in detail with reference to the drawings.

Fig. 1 is a block diagram of a picture processing apparatus. Connected to a processor 1 by a bus line are a ROM 2 storing a program for controlling the processor, a RAM 3 for storing the results of processing, which is performed by the processor, or window data, an A/D converter 5 for converting analog picture data picked up by a camera 4 into digital picture data and for outputting the converted data, and a frame memory 7 for storing picture data displayed on a CRT display 6.

A look-up table LUTW similarly connected to the processor 1 is used in order to perform preprocessing of a picture before convolution processing is executed and is composed of operators for e.g. a binary coding operation, noise removal, density conversion and the like. The results of processing using the look-up table LUTW are applied to a convolution arithmetic unit 8, and the results of processing performed by the latter are temporarily stored in a buffer RAM 9. The results of convolution processing from the buffer RAM 9 are stored in the frame memory 7 via the bus of the processor 1 and are displayed on the CRT display 6.

Fig. 2 is a block diagram illustrating one example of the construction of the abovementioned look-up table LUTW.

The look-up table LUTW is equipped with two tables, ie table memories, TBL₀, TBL₁ storing operators for performing operations that differ from each other on one item of pixel data, and an arithmetic unit 10 which uses operators Gᵢⱼ, Fᵢⱼ of these tables TBL₀, TBL₁ to operate on every item of pixel data xᵢⱼ. The pixel data xᵢⱼ are inputted by data lines D₀ - D₇. The addresses of the tables TBL₀, TBL₁ correspond to the address locations of 5 x 5 items of pixel data xᵢⱼ and are designated from address lines A₀ - A₄. That is, a pixel x₀₀ corresponds to an address ADDR₀₀, a pixel x₀₁ corresponds to an address ADDR₀₁, and a pixel x₄₄ corresponds to an address ADDR₂₄. With this number of 5 x 5 pixels, the five address lines A₀ - A₄ are adequate. However, in case of 256 x 254 pixels, for example, 16 address lines will be required.

Fig. 3 illustrates an example of the array of operators in the tables TBL₀, TBL₁. Operators G₀₀, F₀₀ to be applied to pixel data x₀₀ are stored at the locations of addresses ADDR₀₀, operators G₀₁, F₀₁ to be applied to pixel data x₀₁ are stored at the locations of addresses ADDR₀₁ of the tables TBL₀, TBL₁, and operators G₄₄, F₄₄ to be applied to pixel data x₄₄ are stored at the locations of addresses ADDR₂₄ of the tables TBL₀, TBL₁. In the example shown in Fig. 2, the tables TBL₀, TBL₁ comprise two separate RAMs. One-bit window data Wᵢⱼ are applied to the chip select terminals cs of these RAMs directly or upon being inverted by an inverter 11. Accordingly, when the item of window data Wᵢⱼ is "0", only the table TBL₀ is selected and the pixel data xᵢⱼ from the data lines D₀ - D₇ is operated upon in the arithmetic unit 10 by the operator Gᵢⱼ from the table TBL₀. When the item of window data Wᵢⱼ is "1", only the table TBL₁ is selected and the pixel data xᵢⱼ from the data lines D₀ - D₇ is operated upon in the arithmetic unit 10 by the operator Fᵢⱼ from the table TBL₁.

In the foregoing embodiment, the tables TBL₀, TBL₁ are constituted by separate RAMs and the window data Wᵢⱼ is supplied to the chip select terminals cs of the respective RAMs. However, a modification is possible in which the tables TBL₀, TBL₁ are constituted by a single RAM. In such case, the address lines to the RAM would be increased by one and the window data would be inputted by one address line A₅ among the six address lines A₀ - A₅. This would make it possible to access addresses ADDR₀₀ - ADDR₃₁ of the single RAM when the window data Wᵢⱼ is "0" and addresses ADDR₃₂ - ADDR₆₃ when the window data Wᵢⱼ is "1". Accordingly, if the operators G₀₀, G₀₁, ..., G₄₄ are stored at the locations of addresses ADDR₀₀, ADDR₀₁, ..., ADDR₂₄ of the RAM and the operators F₀₀, G_{F1}, ..., F₄₄ are stored at the locations of addresses ADDR₃₂, ADDR₃₃, ..., ADDR₅₁ of the RAM, then the operators can be selected by switching between the tables TBL₀ and TBL₁.

The operation of the picture processing apparatus having the construction shown in Figs. 1 through 3 will now be described.

Assume that the pixel data xᵢⱼ to be processed have been stored in the frame memory 7. In accordance with the control program stored in the ROM 2, the processor 1 successively fetches the pixel data xᵢⱼ from the frame memory 7 and inputs the data to the look-up table LUTW. On the other hand, the window data Wᵢⱼ for window processing are stored in the RAM 3. The processor 1 sends the window data Wᵢⱼ from the RAM 3 to the look-up table LUTW upon correlating the data with the pixel data xᵢⱼ in frame memory 7.

Fig. 4 illustrates an example of the form of processing actually performed by the look-up table LUTW. With regard to pixel data xᵢⱼ, for example, the look-up table LUTW in which the predetermined operators are arrayed delivers an output without conversion, namely without executing any processing whatsoever, when the window data Wᵢⱼ is "0". When the window data Wᵢⱼ is "1", the look-up table LUTW delivers an output upon performing binary coding processing, the threshold value being "2". Since the window data Wᵢⱼ is supplied to the look-up table LUTW from the input side thereof in accordance with the invention, the hard-wired logic for window processing required in the conventional apparatus is unnecesary.

The results outputted by the look-up table LUTW are again stored in the frame memory 7. Next, the processor 1 shifts control from the look-up table LUTW to the convolution arithmetic unit 8. The convolution arithmetic unit 8 fetches the pixel data preprocessed and window processed by the look-up table LUTW from the frame memory 7 and performs a convolution operation on these data. The results of convolution processing are accumulated in the buffer RAM 9. When all convolutions end, the results are again stored in the frame memory 7. Thus, a picture resulting from the preprocessing and window processing performed by the look-up table LUT and the convolution processing performed by the convolution arithmetic unit is displayed on the CRT display 6.

Though an embodiment of the present invention has been described, the invention is not limited thereto but can be modified in various ways within the gist of the invention without departing from the scope of the claims thereof.

In accordance with the picture processing apparatus of the present invention, the window data are inputted to the input side of the look-up table. In order to perform window processing, therefore, it is no longer required to provide hard-wired logic on the output side of the reference table. This makes it possible to lower the cost of the apparatus.

Furthermore, when the processing circuit is designed and modified, the contents of the RAMs can be prepared in advance or altered. As a result, the time required for designing the apparatus can be shortened and both design and modification are greatly facilitated.

## Claims

1. A picture processing apparatus for performing predetermined operations on pixel data constituting a picture, characterised by:
a plurality of table memories (TBL₀, TBL₁) in which operators are stored;
address input lines for inputting address data, which correspond to addresses of pixel data, to each of said table memories;
window data lines for selecting said table memories by window data for said pixel data; and
processing means (10) for subjecting pixel data to predetermined processing by an operator from a designated address of a selected table memory.

2. A picture processing apparatus according to claim 1, characterized in that said table memories are constituted by a RAM.

3. A picture processing apparatus according to claim 2, characterized in that said table memories are constructed on different RAM chips, and a table memory is selected by a chip select signal.

4. A picture processing apparatus according to claim 2, characterized in that said table memories are constructed on the same RAM and a table memory is selected by window data supplied by address lines of said RAM.

5. A picture processing apparatus according to claim 1, characterized in that said window data are stored in a RAM.

6. A picture processing apparatus according to claim 1, characterized in that preprocessing for a convolution operation is executed by the operators stored in said table memories.

## Patentansprüche

1. Bildverarbeitungsvorrichtung zur Ausführung vorbestimmter Operationen an Pixeldaten, die ein Bild bilden,
**gekennzeichnet durch**
mehrere Tabellenspeicher (TBL₀, TBL₁), in denen Operatoren gespeichert sind,
Adresseneingangsleitungen zur Eingabe von mit Adressen von Pixeldaten korrespondierenden Adresseneingangsdaten in jeden Tabellenspeicher (TBL₀, TBL₁),
Fensterdatenleitungen zur Auswahl der Tabellenspeicher (TBL₀, TBL₁) durch für die Pixeldaten vorgesehene Fensterdaten, und eine Verarbeitungseinrichtung (10) zur Ausfuhrung einer vorbestimmten Verarbeitung von Pixeldaten durch einen Operator einer ausgewählten Adresse eines ausgewählten
Tabellenspeichers (TBL₀, TBL₁).

2. Vorrichtung nach Anspruch 1,
**dadurch gekennzeichnet,**
daß die Tabellenspeicher (TBL₀, TBL₁) durch zumindest einen Speicher mit wahlfreiem Zugriff (RAM) gebildet sind.

3. Vorrichtung nach Anspruch 2,
**dadurch gekennzeichnet,**
daß die Tabellenspeicher (TBL₀, TBL₁) auf verschiedenen RAM-Chips ausgebildet sind, und ein Tabellenspeicher (TBL₀, TBL₁) durch ein Chipauswahlsignal auswählbar ist.

4. Vorrichtung nach Anspruch 2,
**dadurch gekennzeichnet,**
daß die Tabellenspeicher (TBL₀, TBL₁) auf demselben RAM ausgebildet sind und ein Tabellenspeicher (TBL₀, TBL₁) durch Fensterdaten, die durch eine Adressenleitung des RAM zugeführt sind, auswählbar ist.

5. Vorrichtung nach einem der vorhergehenden Ansprüche,
**dadurch gekennzeichnet,**
daß die Fensterdaten in einem RAM gespeichert sind.

6. Vorrichtung nach einem der vorhergehenden Ansprüche,
**dadurch gekennzeichnet,**
daß eine Vorverarbeitung für eine Schaltungsoperation durch die in den Tabellenspeichern (TBL₀, TBL₁) gespeicherten Operatoren ausführbar ist.

## Revendications

1. Un appareil de traitement d'images pour effectuer des opérations déterminées a l'avance sur des données de pixel constituant une image, caractérisé par :
un ensemble de mémoires de table (TBL₀, TBL₁) où sont stockés des opérateurs ;
des lignes d'entrée d'adresses pour faire entrer des données d'adresses, qui correspondent aux adresses des données de pixel, dans chacune desdites mémoires de table ;
des lignes de données de fenêtre pour choisir lesdites mémoires de table par des données de fenêtre pour lesdites données de pixel ; et
des moyens de traitement (10) pour soumettre les données de pixel a un traitement déterminé a l'avance a l'aide d'un opérateur a partir d'une adresse désignée d'une table de mémoire choisie.

2. Un appareil de traitement d'images selon la revendication 1, caractérisé en ce que lesdites mémoires de table sont constituées par une RAM.

3. Un appareil de traitement d'images selon la revendication 2, caractérisé en ce que lesdites mémoires de table sont réalisées sur différentes puces électroniques en forme de RAM, et une mémoire de table est choisie par un signal de choix a puces électroniques.

4. Un appareil de traitement d'images selon la revendication 2, caractérisé en ce que lesdites mémoires de table sont réalisées sur la même RAM et une mémoire de table choisie par des données d'image fournies par des lignes d'adresses de ladite RAM.

5. Un appareil de traitement d'images selon la revendication 1, caractérisé en ce que lesdites données d'image sont stockées dans une RAM.

6. Un appareil de traitement d'images selon la revendication 1, caractérisé en ce qu'un traitement préalable pour une opération de convolution est effectuée par les opérateurs stockés dans lesdites mémoires de table.
